# EUROPEAN PATENT SPECIFICATION

(11) **EP 3 909 890 B1**
(45) Date of publication and mention of the grant of the patent: **28.12.2022**
(21) Application number: 21173631.9
(22) Date of filing: 12.05.2021
(51) Int. Cl.: B65G 47/14, B23P 19/00, B25J 9/00, B65G 47/22, B65G 47/68, B65G 47/76

(54) **A FEEDER DEVICE FOR ROBOTS, ROBOTIC ARMS AND AUTOMATION SYSTEMS**
ZUFÜHRVORRICHTUNG FÜR ROBOTER, ROBOTERARME UND AUTOMATISIERUNGSSYSTEME
DISPOSITIF D'ALIMENTATION POUR ROBOT, BRAS ROBOT ET SYSTÈMES D'AUTOMATISATION

(30) Priority: 12.05.2020 IT 202000010702
(43) Date of publication of application: 17.11.2021
(73) Proprietor: Tera Automation S.r.l., 52014 Poppi Arezzo (IT)
(72) Inventor: FIORINI, Luca, 52011 BIBBIENA (AR) (IT)
(74) Representative: Milli, Simone

(56) References cited:
- EP-A1- 2 835 214
- GB-A- 839 098
- US-A1- 2020 101 593

## Description

This invention relates to a feeder device for robots and robotic arms, automation systems and the like and is aimed at the field of industrial automation, in particular automatic robotized systems.

The need for flexible robotized systems is constantly growing which are able to satisfy a wide range of requirements.

A problem of these systems is due to the fact that, when the pieces to be fed comprise at least one cylindrical part or tend to superpose, even if in a planimetric fashion, they are prone to rolling, thereby more often than not providing parts to the robot which cannot be easily gripped.

With this type of feeder, whether they feed in a linear and/or percussion fashion, it is not possible to vary, in any case, the position and the arrangement of the pieces on the plane, forcing the adoption of further mechanisms for overturning the part.

For this purpose, feeder devices feed the pieces which are to be picked up by the robots through a mechanical shaking action and/or linear movement obtained by means of motor-driven belts.

There are prior art feeder devices are known which comprise a rotary and vibrating plate, if necessary with strikers used to move the parts to be separated from each other.

These feeders are very expensive and have the problem that, during operation of the vibrating means, the components to be picked up reach the peripheral portions of the plate and therefore tend to overlap without providing clear pick-up points for the robot. These devices are, for the most part, limited to lightweight and small pieces in order to be able to easily move them.

The vibrating labyrinth orienting devices are very efficient and of limited cost.

However, the latter have the limitation of being shaped only for a predetermined product and they therefore lack flexibility.

A valid alternative to these feeders, which is inexpensive and flexible, is that with vibrating channels. They use the percussion principle for singularising, aligning and disentangling the elements.

However, these types of feeder device are unable to overturn the parts and cannot be equipped with backlighting means. Moreover, in devices of this type the objects arrive at the robot arranged in a non-organic manner on the gripping surface, making the gripping work of the robot more difficult.

These problems are overcome by the component for feeding robots described in US patent application No. US 2020/101593, filed by the same applicant, which discloses a feeder device according to the preamble of claim 1.

In the above-mentioned application, the feeder device is compact and suitable for objects of any size, thanks to the closed loop arrangement of the relative belts and with the possibility of adjusting the inclination of one or more of the conveyor belts, which produces a counter-slope step suitable for overturning even larger objects.

However, the Applicant has found that this slope is pernicious when some types of object to be picked up, in particular those least close to a spherical body, slowing down their path if they must climb up the belt, accumulate close to the end of the belt, causing a blockage which forces the operator to intervene.

Moreover, the slope produces a step which risks causing the part transported by the first belt to fall out of the second belt, forcing the operator to collect it.

Another problem of the device according to the previous patent application is due to the fact that the percussion imparted by the pistons is not sufficient to overturn larger pieces, because they receive little elastic charge from the belt.

The aim of the invention is to overcome the above-mentioned drawbacks in known types of feeder device for robots and robotic arms, automation systems and the like which improves the device described in Italian patent application No. 102018000009113, in such a way as to limit as much as possible, if not completely avoid, the intervention of the operator during operation of the machine.

In the context of the above-mentioned purpose, an aim of the invention is to provide a feeder device for robots and robotic arms, automation systems and the like, which eliminates every risk of slowing down or blocking of the parts close to the "jump" from one belt to another.

Another aim of the invention is to prevent the pieces from falling when passing from the first to the second belt.

Another aim of the invention is to improve the percussion effect of the belt, allowing good elastic rebound for any part.

Yet another aim of the invention is to provide a feeder device for robots and robotic arms, automation systems and the like, with means which are easily available on the market and using materials of common use, in such a way that the device is economically competitive.

The invention is defined by a feeder device according to claim 1.

This purpose, as well as these and other aims which will become clearer below, are achieved by a feeder device for robots and robotic arms, automation systems and the like, according to the invention, according to any one of the appended claims.

Further features and advantages of the invention are more apparent from the description of a preferred, non-limiting embodiment of the feeder device for robots and robotic arms, automation systems and the like, illustrated by way of example and without limiting the scope of the invention, with the aid of the accompanying drawings, in which:
Figure 1 is a perspective view of an embodiment of the device 1;
Figure 2 is a side view the device 1 of Figure 1;
Figure 3 is a plan view of the device 1 without the slidable belts 13' and 13";
Figure 4 is a front view of the device 1 of Figure 1.

The above-mentioned drawings show a preferred embodiment of a feeder device for robots and robotic arms, automation systems and the like, according to the invention, which is identified in its entirety with the numeral 1 and which comprises, on a frame 2:
a series of conveyor belts 3' and 3" which constitute a closed loop for transporting objects (not illustrated) designed to be gripped by a robot (not illustrated), in such a way that the objects circulate in a cyclical and continuous manner within this closed circuit;
the conveyor belts 3' and 3" comprise at least a first belt 3' and a second belt 3" which have, respectively, a first direction of extension 10' and a second direction of extension 10" substantially parallel to each other and oriented in opposite directions;

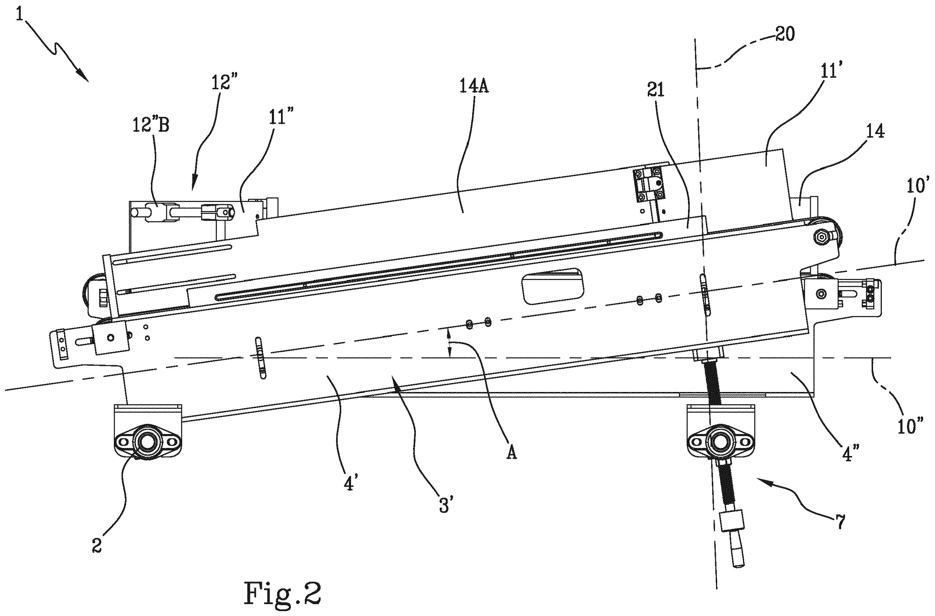

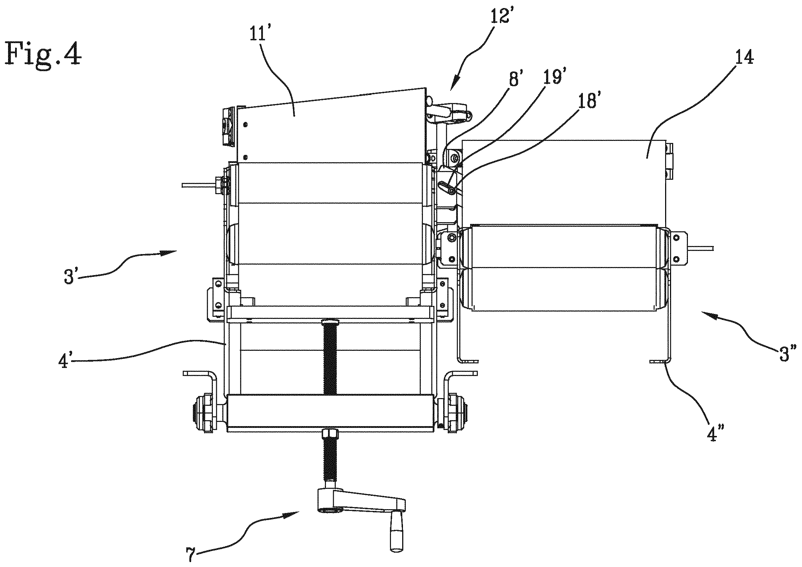

it is possible to orient at least one of the conveyor belts 3' and 3", using means 7 for adjusting its slope (Fig. 4), known from Italian patent application No. 102018000009113, along an operating axis 20 substantially normal relative to the ground, between a first position wherein the relative first or second direction of extension 10' or 10" is substantially parallel to the ground and a second inclined position, wherein the relative first or second direction of extension 10" defines an angle A with the ground (Fig. 2).

A special feature of the device is that it comprises means 11' and/or 11" for adjusting the orientation of the flow of objects to take from the first belt 3' towards the second belt 3".

Obviously, the directions of extension 10' or 10" refer to the belt (respectively 3' or 3") on which there are the adjustment means 11' and/or 11": if, for example, reference is made to the adjustment means 11', then the direction to be taken into consideration will be that referred to the first belt 3', that is to say, the direction of extension 10'.

Otherwise, for the adjustment means 11", the direction 10" of the belt 3" applies.

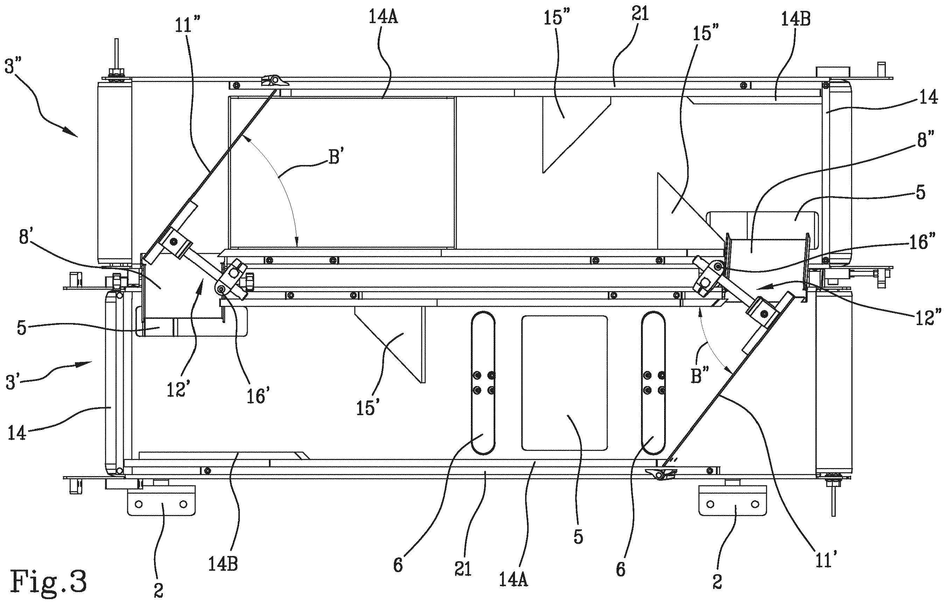

With reference to Figure 3, the adjustment means comprise at least one abutment element 11' and/or 11", depending on whether the abutment is in the first 3' and/or in the second belt 3", for the objects moving on the belts 3' and/or 3‴. The element 11' (or 11") extends in a direction transversal to the first direction of extension 10' (or 10") relative to the belt 3' or 3". The abutment element 11' (or 11") can be oriented, by pivoting means, of an inlet angle B' (or B") formed with the same direction of extension 10' or 10"; the angles B' and B" are between a minimum value, preferably of approximately 30° and 90° which corresponds to the configuration wherein the abutment element 11' (or 11") is substantially parallel to the transversal edge of the belt 3' (or 3").

Obviously, this configuration of the angles B and B' is not limited, since they may also vary for amplitudes less than or greater than the example interval considered in this case.

The Applicant has perceived that, thanks to the possibility of orienting the inlet angle B' and B", the objects acquire a higher or lower speed of approach to the outlet opening towards the other belt, producing an increase or decrease in the flow rate of the device 1.

For this reason, with variations in the shape and dimensions of the objects, the operator modifies the orientation of the contact element 11' (11") on the supporting surface of the belt 3' (3"), in such a way as to vary the angle B' (B").

For example, in the case of flat and heavy objects passing from the belt 3' to 3", the angle B' will decrease. Vice versa, in the case of lightweight objects with a spherical shape, B' may increase.

More specifically, this makes it possible to adjust the number of objects per minute (flow) which translate from one belt to another and their speed in transit.

Preferably, perimeter side panels 14 are mounted for the conveyor belts 3' and 3". The side panels 14 are associated with the perimeter edges of the same belts 3' and 3" and act as containment for the objects on each slidable belt 13' and 13" which covers the supporting surface of the respective belt 3' or 3", avoiding external dimensions, so that an adjustment is allowed which is simpler than the device according to patent application No. 102018000009113.

Moreover, the fact that the perimeter side panels 14 are slightly superposed on the belts 13' and 13" avoids the risk of the objects catching between the side panel 14 and the belt 13' and 13" or also being pulled between side panel 14 and belt 13' and 13".

Lastly, the side panels 14 allow the fixing of traps 15' and 15", of known type, which obstruct the movement of the objects on the supporting surface of the belts 3' and 3" causing the movement of the objects: the Applicant understood that the fixing of the traps 15' and 15" to the perimeter side panels 14 facilitates their movement and therefore allows the operator to "draw" the trajectory of movement of the objects in the manner he/she considers most appropriate as a function of the dimensions and shape of the objects.

The Applicant has noticed that when the angle B' (B") is reduced to speed up the flow of heavy and/or flat pieces, the outlet mouth which allows the passage of the objects from one belt to the other narrows, creating a bottleneck.

In fact, it is evident that, depending on the size of the angle B' (or B") the outlet mouth of the objects from one belt to another will be more or less wide and will oscillate between a maximum opening of the mouth and a minimum opening of the mouth corresponding to the case wherein the configuration of the abutment element 11' (or 11") does not allow the light. Even though in this way it is possible to modulate the flow of the objects so that they pass from one belt to another in the maximum possible number (maximum opening dimensions of the outlet opening), or alternated with each other, depending on requirements, however, in order to make the machine more flexible and not clog the flow of objects if they are large, the Applicant has devised inserting at least one movable side panel 14A between the perimeter side panels 14.

Advantageously, the movable side panel 14A is mounted on a lateral edge of one of the conveyor belts, for example the first belt 3'. The movable side panel 14A has an end portion fixed to the respective abutment element 11', in such a way as to activate the pivoting means 12' and, since it is designed to be moved along the lateral edge substantially in a direction parallel to the relative direction of extension 10', it determines the size of the angle B'.

The movable panel 14A can, in fact, be moved gradually between a position of minimum elongation wherein it determines the minimum value of the inlet angle B' (for example substantially equal to 20°), and a position of maximum elongation, wherein said movable panel (14A) can determine the maximum value of the inlet angle (B' substantially equal to 90°).

Due to the way it is made, the device is very flexible and, obviously, in the position of minimum elongation the side panel may also have an angle greater than the minimum value if it is to further reduce the discharge mouth, as well as - similarly - when the side panel 14A is in the position of maximum elongation, the abutment element 11' (11") may be oriented in such a way as to define an angle B' (B") less than the maximum value. Theoretically, placing the side panel 14A in the position of maximum elongation and "closing" the discharge mouth, the angle B' (B") may also be obtuse.

When the operator is therefore forced to incline the abutment element 11' (11") in such a way as to increase the flow rate of the objects (volume of pieces in the unit of time which pass from one belt to another) in order not to close the outlet mouth towards the other belt, it is necessary to move the movable panel 14A towards the maximum elongation position.

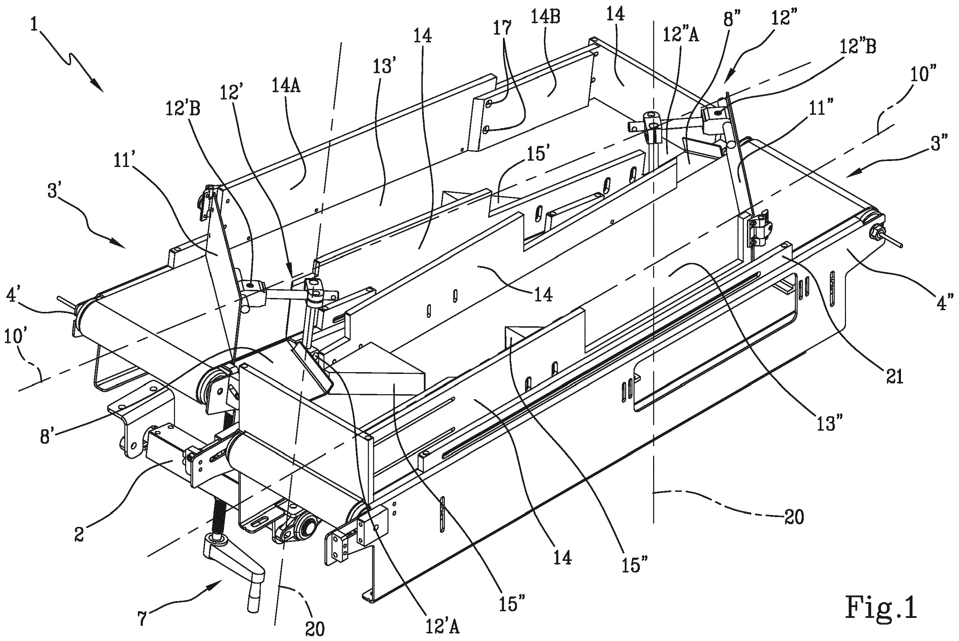

During installation of the device 1, the side panel 14 is firstly mounted, fixing it to a steel support 21 associated with the fixed load-bearing structure 4' or 4" (Figures 1 and 2) and then the side panel 14B is mounted on it.

The support 21 preferably has a slot which extends substantially for its entire longitudinal dimension.

When the operator needs to move the side panel 14A, the screws 17 which connect the 14A to the steel support 21 must be loosened and the side panels 14A and 14B removed together, since they remain securely fixed to each other by the screws 17.

Once the new position of the side panel 14A has been selected, the screws which connect the side panel 14A to the support 21 are tightened and at this point the side panel 14B is located: loosening the screws 17 moves the side panel 14B until touching the high side panel 14, the one in the end edge (short side) of the device 1 and then the screws 17 to lock it are tightened.

This makes it possible to adjust the number of objects per minute (flow) which translate from one belt to another and their speed in transit, with any condition, type, shape and dimensions of the objects to be processed. Preferably, the pivoting means comprise a toggle 12' or 12" (with respect to the abutment element 11' and 11"). The toggle 12' (or 12") is designed to rotate about the operating axis 20 and has a first end 12'A (12"A) integral with the frame 2 and a second end 12'B (12"B) associated with the abutment element 11' or 11", in such a way that the rotation of the toggle 12' (or 12") about the operating axis 20 allows the orientation of the abutment element 11' (or 11") on the supporting surface of the conveyor belt 3' (or 3").

For example, the adjustment of the angle B' formed by the edge of the first belt 3' and the abutment element 11' in turn determines the size of the outlet opening of the objects from the belt 3', to the other belt, the second belt 3" and, consequently, the flow of the objects.

The toggle 12' (or 12") is designed to be fixed in a predetermined position by a locking screw 16' (or 16"), in such a way as to prevent it from rotating freely about the operating axis 20.

Therefore, thanks to the toggle 12' (12"), when the size of the objects varies, the orientation of the abutment element 11' (11") is changed on the supporting surface of the belt 3' (3"), in such a way as to have the most suitable configuration to allow the passage of the objects from one belt to the other.

Advantageously, there is a chute 8' and/or 8" associated, for at least one relative lateral portion, with a part of an edge of the conveyor belts 3' and 3", in such a way as to accompany the change in level which the objects must exceed due to the slope when the device 1 is in the second position, the inclined one.

Advantageously, the operator can plan where the objects fall on the belt below moving along the chute 8' (8"), using means for adjusting the inclination of the angle of the chute which is defined by the direction normal relative to the ground and by the profile of the chute 8' (8") itself.

In the example shown in Figure 4, the angle of the chute 8', which connects the belt 3' to 3", is adjusted by means of a pin 18' integral with the chute 8' and which is designed to engage on a slot 19' formed in a component integral with the load-bearing structure 4'.

In this way, depending on the dimensions of the object, the operator can make it fall into the central zone of the belt of the underlying belt or in a more peripheral zone (if the object is large).

Preferably, in order to increase the elastic response of the sliding belt 13' or 13" especially close to percussion means, for example procured by the pistons 6 (Figures 3) which allow, with their percussions on the belt 13' or 13", the objects to be positioned in two separate parts of the belt 3' or 3", the fixed load-bearing structure 4' or 4" for supporting the sliding belt 13' or 13" of at least one of the conveyor belts 3' and 3" has discontinuous parts 5, in practice suitably defined holes, in such a way that locally the sliding belt 13' or 13" is free to deform elastically in a normal direction with respect to said direction of extension 10' and 10". In this way, the percussion which moves the objects is followed by a rebound of them on the belt 13' or 13" which is more evident than that of the invention described in patent application 102018000009113.

In the same way, the Applicant preferably contemplates other of these discontinuous parts 5 close to the final part of the chute 8' and 8", that is to say, the part close to the belt below where the discontinuous parts 5 are defined in the structure 4' and 4". The parts 5 allow the rebound effect to be increased during falling from one belt to another and the objects falling could be crushed striking the structure 4' or 4".

Preferably, the device 1 comprises means for backlighting the objects, with respect to at least a discontinuous part 5 of the fixed load-bearing structure 4' or 4" of the conveyor belts 3' or 3", in the area designed for gripping the objects by the robot or robotic arm, in such a way that the chromatic contrast between the objects and said portion clearly highlights the edges of each of the objects.

These means, which exploit the properties of the belt of not being fully optically opaque, comprise a double lighting system at the area intended for the gripping of the objects, in which the above-mentioned discontinuous part 5 is formed: a first infrared backlighting device, of per se known type, below the discontinuous part 5, and a second lighting device positioned on the opposite side relative to said conveyor belts 3' or 3".

In practice, the operator can configure the orientation of the abutment element 11' and/or 11" depending on the type of objects which must be fed to the robot, varying the inlet angle B' or B" and affecting the flow rate of the device 1.

For example, with bulky objects, with large dimensions, for example buckles for belts, it will be worthwhile reducing the angle B' or B" by inclining the abutment 11' (or 11") in a suitable manner to allow the movement of the object towards the chute 8' (8").

As mentioned, with variations in the dimensions of the objects to be picked up the inclination of the chute 8' (8") varies; for example, a larger object will require a steeper angle of inclination so as to facilitate the overturning of the objects on the belt 13' (13").

From the above description it may be seen how the invention achieves the preset purpose and aims and in particular it should be noted that a feeder device is made for robots and robotic arms, automation systems and the like which allows a continuous production completely avoiding the intervention of the operator, thus improving the invention described in Italian patent application No. 102018000009113.

More specifically, the making of the adjustable contact element allows the operator to "personalise" the production on a standard and modular system according to the objects which feed the robot.

Another advantage of the invention is due to the fact that with the making of the inclinable chute, it is no longer possible for the objects to fall between a sloping belt and the conveyor belt below.

For this reason, each risk of slowing down or blocking of the parts close to the "jump" from one belt to another is avoided.

Another advantage of the invention is to improve the percussion effect of the belt, allowing a good elastic rebound of any object, avoiding crushing.

Moreover, having a discontinuous part of the fixed load-bearing structure of the belt at the area designed to grip the objects by the robot or the robotic arm allows the application of a double lighting system from below and, with respect to the belt, positioned obviously at the vision system connected to the robot, considerably improving the operation and the production efficiency.

Lastly, the use of means which are easily available on the market and the use of common materials makes the device economically competitive, reliable and maintainable.

In practice, the materials used, as well as the dimensions, may be of any type, depending on requirements, provided that they are consistent with their production purposes.

## Claims

1. A feeder device (1) for robots and robotic arms, automation systems and the like, comprising, on a frame (2):
a set of conveyor belts (3', 3") constituting a closed loop for transporting objects designed to be gripped by a robot in such a way that the objects circulate cyclically and continuously within the closed loop;
said conveyor belts (3', 3") comprising at least a first belt (3') and a second belt (3") having, respectively, a first direction of extension (10') and a second direction of extension (10") substantially parallel to each other and oriented in opposite directions;
it being possible to orient at least one of said conveyor belts (3', 3"), using means (7) for adjusting the slope, along an operating axis (20) substantially normal relative to the ground, between a first position wherein the relative first or second direction of extension (10', 10") is substantially parallel to the ground and a second inclined position, wherein said relative first or second direction of extension (10") defines an angle (A) with the ground;
means (11', 11") for adjusting the orientation of the flow of said objects from said first belt (3') to said second belt (3‴);
a chute (8', 8") associated to a part of an edge of said conveyor belts (3', 3"), in such a way as to accompany the change in level which said objects must overcome due to the slope in said second inclined position;
**characterised in that** it comprises means for adjusting the angle of inclination of the chute (8', 8"), said angle of inclination being defined by the direction normal to the ground and by the profile of said chute (8', 8").

2. The device (1) according to the preceding claim, wherein the adjusting means (11', 11") comprise at least one abutment element (11', 11") for said objects moving on at least one of either said first belt (3') or said second belt (3"), extending transversally with respect to said relative first or second direction of extension (10', 10"), which can be oriented by an inlet angle (B', B") formed with said first or second relative direction of extension (10', 10") using pivoting means (12', 12"); said inlet angle (B', B") being between a minimum value, preferably equal to 20°, and a maximum value, preferably equal to 90°.

3. The device (1) according to any one of the preceding claims, comprising perimeter side panels (14) connected to the edges of said conveyor belts (3', 3").

4. The device (1) according to the preceding claim, wherein said perimeter side panels (14) comprise at least one movable side panel (14A):
mounted on a lateral edge of one of said conveyor belts (3', 3"),
having an end portion fixed to the respective abutment element (11', 11") in such a way as to activate said pivoting means (12', 12"), and
designed to be gradually moved along said lateral edge substantially in a direction parallel to the relative direction of extension (10', 10") of the belt between a position of minimum elongation, wherein said movable side panel (14A) determines the minimum value of the inlet angle (B', B"), and a position of maximum elongation, wherein said movable side panel (14A) determines the maximum value of said inlet angle (B', B").

5. The device (1) according to the preceding claim, wherein said pivoting means (12', 12") comprise a toggle (12', 12") designed to rotate about said operating axis (20) and comprising a first end (12'A, 12"A) integral with said frame (2) and a second end (12'B, 12"B) associated with said abutment element (11', 11"), in such a way that the rotation of said toggle (12', 12") about said operating axis (20) allows the orientation of said abutment element (11', 11") on the supporting surface of said conveyor belt (3', 3").

6. The device (1) according to the preceding claim, wherein said toggle (12', 12") is designed to be fixed in a predetermined position by means of a locking screw (16', 16"), in such a way as to prevent its free rotation about said operating axis (20).

7. The device (1) according to any one of the preceding claims, wherein at least one of said conveyor belts (3', 3") comprises a fixed load-bearing structure (4', 4") for supporting a sliding belt (13', 13") for covering the supporting surface of each of said conveyor belts (3', 3"), said fixed load-bearing structure (4', 4") having discontinuous parts (5) close to percussion means (6) and/or close to the final part of said chute (8', 8"), in such a way that, locally, in said discontinuous parts (5), said sliding belt (13', 13") is free to elastically deform in a normal direction with respect to said direction of extension (10', 10").

8. The device (1) according to the preceding claim, comprising means for backlighting said objects, with respect to at least one of said discontinuous parts (5), said at least one of said discontinuous parts (5) being positioned in the area designed for gripping said objects.

## Patentansprüche

1. Zuführvorrichtung (1) für Roboter und Roboterarme, Automatisierungssysteme und dergleichen, umfassend an einem Rahmen (2):
einen Satz von Förderbändern (3', 3"), die eine geschlossene Schleife zum Transportieren von Gegenständen bilden, die dazu ausgelegt sind, von einem Roboter ergriffen zu werden, sodass die Gegenstände innerhalb der geschlossenen Schleife zyklisch und kontinuierlich umlaufen;
wobei die Förderbänder (3', 3") mindestens ein erstes Band (3') und ein zweites Band (3") umfassen, die jeweils eine erste Erstreckungsrichtung (10') und eine zweite Erstreckungsrichtung (10") aufweisen, die im Wesentlichen parallel zueinander und in entgegengesetzte Richtungen ausgerichtet sind;
wobei es möglich ist, mindestens eines der Förderbänder (3', 3") unter Nutzung von Mitteln (7) zum Einstellen der Neigung entlang einer Betriebsachse (20), die im Wesentlichen senkrecht relativ zum Boden ist, zwischen einer ersten Position, in der die relative erste oder zweite Erstreckungsrichtung (10', 10") im Wesentlichen parallel zum Boden ist, und einer zweiten geneigten Position, in der die relative erste oder zweite Erstreckungsrichtung (10") einen Winkel (A) mit dem Boden definiert, auszurichten;
Mittel (11', 11") zum Einstellen der Ausrichtung des Stroms der Gegenstände vom ersten Band (3') zum zweiten Band (3‴);
eine Rutsche (8', 8"), die mit einem Teil einer Kante der Förderbänder (3', 3") assoziiert ist, sodass sie die Höhenänderung begleitet, die die Gegenstände aufgrund der Neigung in der zweiten geneigten Position überwinden müssen,
**dadurch gekennzeichnet, dass** sie Mittel zum Einstellen des Neigungswinkels der Rutsche (8', 8") umfasst, wobei der Neigungswinkel durch die Richtung senkrecht zum Boden und durch das Profil der Rutsche (8', 8") definiert ist.

2. Vorrichtung (1) nach dem vorhergehenden Anspruch, wobei die Einstellmittel (11', 11") wenigstens ein Anschlagelement (11', 11") für die Gegenstände umfassen, die sich auf wenigstens einem von entweder dem ersten Band (3') oder dem zweiten Band (3") bewegen, wobei das Anschlagelement sich quer in Bezug auf die relative erste oder zweite Erstreckungsrichtung (10', 10") erstreckt, die durch einen Einlaufwinkel (B', B") ausgerichtet werden kann, der mit der ersten oder zweiten relativen Erstreckungsrichtung (10', 10") unter Nutzung von Schwenkmitteln (12', 12") gebildet ist; wobei der Einlaufwinkel (B', B") zwischen einem Minimalwert, vorzugsweise gleich 20°, und einem Maximalwert, vorzugsweise gleich 90°, liegt.

3. Vorrichtung (1) nach einem der vorhergehenden Ansprüche, umfassend Umfangsseitenplatten (14), die mit den Kanten der Förderbänder (3', 3") verbunden sind.

4. Vorrichtung (1) nach dem vorhergehenden Anspruch, wobei die Umfangsseitenplatten (14) mindestens eine bewegliche Seitenplatte (14A) umfassen:
die an einer Seitenkante eines der Förderbänder (3', 3") montiert ist,
einen Endabschnitt aufweist, der an dem jeweiligen Anschlagelement (11', 11") befestigt ist, sodass die Schwenkmittel (12', 12") aktiviert werden, und
dazu ausgelegt ist, allmählich entlang der Seitenkante im Wesentlichen in einer Richtung parallel zur relativen Erstreckungsrichtung (10', 10") des Bandes zwischen einer Position minimaler Ausdehnung, in der die bewegliche Seitenplatte (14A) den minimalen Wert des Einlaufwinkels (B', B") bestimmt, und einer Position maximaler Ausdehnung, in der die bewegliche Seitenplatte (14A) den maximalen Wert des Einlaufwinkels (B', B") bestimmt, bewegt zu werden.

5. Vorrichtung (1) nach dem vorhergehenden Anspruch, wobei die Schwenkmittel (12', 12") einen Kniehebel (12', 12") umfassen, der dazu ausgelegt ist, dass er sich um die Betriebsachse (20) dreht und ein erstes Ende (12'A, 12"A), das mit dem Rahmen (2) einstückig ist, und ein zweites Ende (12'B, 12"B) umfasst, das mit dem Anschlagelement (11', 11") so verbunden ist, dass die Drehung des Kniehebels (12', 12") um die Betriebsachse (20) die Ausrichtung des Anschlagelements (11', 11") auf der Stützfläche des Förderbands (3', 3") ermöglicht.

6. Vorrichtung (1) nach dem vorhergehenden Anspruch, wobei der Kniehebel (12', 12") so ausgelegt ist, dass er in einer vorbestimmten Position mittels einer Feststellschraube (16', 16") befestigt ist, sodass seine freie Drehung um die Betriebsachse (20) verhindert wird.

7. Vorrichtung (1) nach einem der vorhergehenden Ansprüche, wobei mindestens eines der Förderbänder (3', 3") eine feste lasttragende Struktur (4', 4") zum Tragen eines Gleitbandes (13', 13") zum Bedecken der Stützfläche eines jeden der Förderbänder (3', 3") umfasst, wobei die feste lasttragende Struktur (4', 4") diskontinuierliche Teile (5) in der Nähe von Schlagmitteln (6) und/oder in der Nähe des Endteils der Rutsche (8', 8") aufweist, so dass sich das Gleitband (13', 13") lokal in den diskontinuierlichen Teilen (5) in einer senkrechten Richtung in Bezug auf die Erstreckungsrichtung (10', 10") elastisch verformen kann.

8. Vorrichtung (1) nach dem vorhergehenden Anspruch, umfassend Mittel zum Hinterleuchten der Gegenstände in Bezug auf mindestens eines der diskontinuierlichen Teile (5), wobei der mindestens eine der diskontinuierlichen Teile (5) im Bereich positioniert ist, der zum Greifen der Gegenstände ausgelegt ist.

## Revendications

1. Dispositif d'alimentation (1) pour robots et bras robot, systèmes d'automatisation et similaires, comprenant, sur un châssis (2) :
un ensemble de bandes transporteuses (3', 3") constituant une boucle fermée pour transporter des objets conçus pour être saisis par un robot de telle sorte que les objets circulent de façon cyclique et continue à l'intérieur de la boucle fermée ;
lesdites bandes transporteuses (3', 3") comprenant au moins une première bande (3') et une deuxième bande (3") ayant, respectivement, une première direction d'extension (10') et une deuxième direction d'extension (10") essentiellement parallèles entre elles et orientées dans des directions opposées ;
dans lequel il est possible d'orienter au moins l'une desdites bandes transporteuses (3', 3"), en utilisant des moyens (7) pour régler la pente, le long d'un axe de fonctionnement (20) essentiellement normal par rapport au sol, entre une première position dans laquelle la première ou la deuxième direction d'extension relative (10', 10") est essentiellement parallèle au sol et une deuxième position inclinée, dans laquelle ladite première ou deuxième direction d'extension relative (10") définit un angle (A) avec le sol ;
des moyens (11', 11") pour régler l'orientation du flux desdits objets de ladite première bande (3') à ladite deuxième bande (3"') ;
une goulotte (8', 8") associée à une partie d'un bord desdites bandes transporteuses (3', 3"), de manière à accompagner le changement de niveau que lesdits objets doivent franchir du fait de la pente dans ladite deuxième position inclinée ;
**caractérisé en ce qu'**il comprend des moyens de réglage de l'angle d'inclinaison de la goulotte (8', 8"), ledit angle d'inclinaison étant défini par la direction normale au sol et par le profil de ladite goulotte (8', 8") .

2. Dispositif (1) selon la revendication précédente, dans lequel les moyens de réglage (11', 11") comprennent au moins un élément de butée (11', 11"), pour lesdits objets se déplaçant sur au moins l'une des bandes entre ladite première bande (3') ou ladite deuxième bande (3"), se prolongeant transversalement par rapport à ladite première ou deuxième direction d'extension relative (10', 10"), qui peut être orienté par un angle d'entrée (B', B") formé avec ladite première ou deuxième direction d'extension relative (10', 10") en utilisant des moyens de pivotement (12', 12") ; ledit angle d'entrée (B', B") étant compris entre une valeur minimale, de préférence égale à 20°, et une valeur maximale, de préférence égale à 90°.

3. Dispositif (1) selon l'une quelconque des revendications précédentes, comprenant des panneaux latéraux périphériques (14) reliés aux bords desdites bandes transporteuses (3', 3").

4. Dispositif (1) selon la revendication précédente, dans lequel lesdits panneaux latéraux périphériques (14) comprennent au moins un panneau latéral mobile (14A) :
monté sur un bord latéral de l'une desdites bandes transporteuses (3', 3"),
comportant une partie d'extrémité fixée à l'élément de butée (11', 11") respectif de manière à activer lesdits moyens de pivotement (12', 12"), et
conçu pour être déplacé progressivement le long dudit bord latéral essentiellement dans une direction parallèle à la direction relative d'extension (10', 10") de la bande entre une position d'allongement minimum, dans laquelle ledit panneau latéral mobile (14A) détermine la valeur minimum de l'angle d'entrée (B', B"), et une position d'allongement maximum, dans laquelle ledit panneau latéral mobile (14A) détermine la valeur maximum dudit angle d'entrée (B', B").

5. Dispositif (1) selon la revendication précédente, dans lequel lesdits moyens de pivotement (12', 12") comprennent une genouillère (12', 12") conçue pour tourner autour dudit axe de fonctionnement (20) et comprenant une première extrémité (12'A, 12"A) solidaire dudit châssis (2) et une deuxième extrémité (12'B, 12"B) associée audit élément de butée (11', 11"), de telle sorte que la rotation de ladite genouillère (12', 12") autour dudit axe de fonctionnement (20) permet l'orientation dudit élément de butée (11', 11") sur la surface de support de ladite bande transporteuse (3', 3") .

6. Dispositif (1) selon la revendication précédente, dans lequel ladite genouillère (12', 12") est conçue pour être fixée dans une position prédéterminée au moyen d'une vis de blocage (16', 16"), de manière à empêcher sa rotation libre autour dudit axe de fonctionnement (20) .

7. Dispositif (1) selon l'une quelconque des revendications précédentes, dans lequel au moins l'une desdites bandes transporteuses (3', 3") comprend une structure porteuse de charge fixe (4', 4") pour supporter une bande coulissante (13', 13") pour couvrir la surface de support de chacune desdites bandes transporteuses (3', 3"), ladite structure porteuse de charge fixe (4', 4") présentant des parties discontinues (5) proches de moyens de percussion (6) et/ou proches de la partie finale de ladite goulotte (8', 8"), de telle sorte que, localement, dans lesdites parties discontinues (5), ladite bande coulissante (13', 13") est libre de se déformer élastiquement dans une direction normale par rapport à ladite direction d'extension (10', 10").

8. Dispositif (1) selon la revendication précédente, comprenant des moyens de rétroéclairage desdits objets, par rapport à au moins une desdites parties discontinues (5), ladite au moins une desdites parties discontinues (5) étant positionnée dans la zone destinée à la préhension desdits objets.
